# EUROPÄISCHE PATENTANMELDUNG

(11) **EP 4 066 955 A1**
(43) Veröffentlichungstag der Anmeldung: **05.10.2022**
(21) Anmeldenummer: 22159660.4
(22) Anmeldetag: 02.03.2022
(51) Int. Cl.: B21C 37/09, B21C 37/12, B21C 37/15, B21C 37/20, B21C 37/26, B21D 53/02, B23K 1/00, F28F 1/36

(54) **RIPPENROHR SOWIE VERFAHREN ZU DESSEN HERSTELLUNG**

(30) Priorität: 31.03.2021 DE 102021108193
(71) Anmelder: Schmöle GmbH, 58730 Fröndenberg (DE)
(72) Erfinder: Neumann, Till, 58640 Iserlohn (DE)
(74) Vertreter: Roche, von Westernhagen & Ehresmann

(57) **Zusammenfassung**

Rippenrohr, umfassend einen Rohrgrundkörper, an dessen Außenseite, insbesondere gesonderte oder integrale, Rippen, vorzugsweise umlaufend, angeordnet sind, dadurch gekennzeichnet, dass die Rippen und/oder der Rohrgrundkörper aus einem mehrschichtigen Material besteht.

## Beschreibung

Die Erfindung betrifft zunächst ein Rippenrohr, insbesondere ein Wärmetauscher-Rippenrohr. Solche Rippenrohre werden in Wärmetauschern eingesetzt und hierbei typischerweise von Fluid, beispielsweise erwärmtem Wasser, durchlaufen. Zur Verbesserung der Wärmeübertragungseigenschaften weisen diese Rohre Rippen auf.

Aus dem Stand der Technik sind dabei grundsätzlich zwei Arten von Rippenrohren bekannt:
Die erste Art besteht aus Rohrgrundkörpern, welchen ein separates Band, aus demselben Werkstoff wie der Rohrgrundkörper oder aus einem anderen Werkstoff, zugeführt wird, wobei das separate Band an der Außenseite des Rohrgrundkörpers festgelegt, typischerweise mithilfe eines Lasers verschweißt oder verlötet wird.

Bei der zweiten Art werden die Rippen aus den Wänden eines Rohrgrundkörpers, beispielsweise durch Beaufschlagung mit Scheibenpaketen, herausgewalzt, so dass hierbei nicht (wie im ersten genannten Fall) gesonderte, sondern hingegen integrale Rippen entstehen.

Auch wenn beide Arten von Rippenrohren grundsätzlich vorteilhaft und erfolgreich eingesetzt werden, besteht doch ein stetes Bedürfnis nach Verbesserungen. Insbesondere besteht hierbei der Wunsch, die Rippenrohre noch ökonomischer herzustellen, wobei andererseits trotzdem noch eine sehr gute Wärmeübertragung im Vordergrund stehen muss, und wobei auch noch weitere Anforderungen zu berücksichtigen sind, wie beispielsweise ein geeigneter Korrosionsschutz.

Die Erfindung löst die gestellte Aufgabe, ein weiter optimiertes Rippenrohr bereitzustellen, mit den Merkmalen des Patentanspruches 1, insbesondere mit denen des Kennzeichenteils, und ist demgemäß dadurch gekennzeichnet, dass die Rippen und/oder der Rohrgrundkörper aus einem mehrschichtigen Material bestehen.

Mit anderen Worten besteht die Idee der Erfindung darin, bei der Herstellung des Rippenrohres ein Material einzusetzen, welches mindestens zwei integrale, insbesondere unlösliche oder untrennbare, (Werkstoff-)Schichten aufweist, beispielsweise ein plattiertes Material.

Aus dem Stand der Technik ist es zwar bekannt, bereits fertiggestellte Rohrgrundkörper aus einem herkömmlichen, stoffeinheitlichen Metall-Material bereitzustellen, und in dieses ein Rohr eines anderen Materials einzubringen (beispielsweise einen Inliner aus Kunststoff, oder ein Rohr eines anderen Metall-Materials). Dass der Rohrgrundkörper selbst aber bereits aus einem mehrschichtigen Material besteht bzw. geformt ist, oder aber die Rippen, wird von der Erfindung erstmalig vorgeschlagen. Dies weist insbesondere den Vorteil auf, dass es, je nach Anwenderwunsch, ermöglicht wird, die Vorteile unterschiedlicher Materialien bei Rippen und/oder Rohrgrundkörpern zu kombinieren.

Auf diese Weise kann beispielsweise eine Rippe bereitgestellt werden, welche an ihrer Außenseite einen Werkstoff aufweist, der einen besonders guten Korrosionsschutz bietet (beispielsweise Edelstahl) und in ihrem Inneren eine Werkstoffschicht einer besonders guten Wärmeleitfähigkeit (beispielsweise Kupfer).

Gleichsam oder alternativ ist es auch möglich, einen Rohrgrundkörper für die Herstellung eines Rippenrohres zu wählen, welcher eine innere Schicht aus einem Werkstoff aufweist, der beispielsweise für die Leitung von Brauchwasser als besonders unkritisch angesehen wird (zum Beispiel Edelstahl) und an der Außenseite einen Werkstoff vorzusehen, welcher für die Auswalzung von Rippen besonders geeignet ist (beispielsweise Kupfer).

Alternativ kann die Außenschicht des Rohrgrundkörpers auch gerade so gewählt werden, dass sie einen besonders guten Korrosionsschutz aufweist (beispielsweise aus Edelstahl) und/oder dass sie für die Anbringung separater Rippen besonders geeignet ist.

Erfindungsgemäß bestehen entweder die Rippen oder der Rohrgrundkörper oder beide aus mehrschichtigem Material.

Es ist also eine Konfiguration vorstellbar, bei welcher die Rippen aus einem mehrschichtigen Material bestehen, der Rohrgrundkörper aber nicht. Alternativ ist eine Konfiguration vorstellbar, bei weicher der Rohrgrundkörper aus einem mehrschichtigen Material besteht und die Rippen nicht.

Auch sind Konfigurationen denkbar, bei welchen sowohl die Rippen als auch der Rohrgrundkörper aus mehrschichtigem Material (üblicherweise einem anderen) bestehen.

Das mehrschichtige Material, welches für die Rippen eingesetzt wird, weist typischerweise drei oder mehr Schichten auf, jenes für den Rohrgrundkörper üblicherweise zwei oder mehr Schichten.

Bei dem mehrschichtigen Material handelt es sich typischerweise um ein integriert-mehrschichtiges Material, also ein Material, welches als Einheit vorliegt, bevor es zu Rippen oder einem Rohrgrundkörper verarbeitet wird.

Die Schichten des Materials sind insbesondere unlöslich bzw. untrennbar verbunden.

Dies ist insbesondere im Vergleich zu einem Rohrgrundkörper zu verstehen, bei welchem beispielsweise ein erstes Rohr in ein zweites Rohr einfach eingeschoben ist oder ähnliches.

Das mehrschichtige Material weist mindestens zwei Schichten aus unterschiedlichen Werkstoffen auf.

Bei den Werkstoffen handelt es sich typischerweise um Metall oder eine Legierung.

Vorteilhafterweise handelt es sich bei dem mehrschichtigen Material um plattiertes Material. Hierbei werden typischerweise unterschiedliche metallische Bänder unter hohem Druck, insbesondere in einem Plattiergerüst, zusammengewalzt. Gegebenenfalls kann durch eine anschließende Wärmebehandlung die erzielte Haftfestigkeit zwischen den einzelnen Lagen bzw. Schichten weiter verbessert werden, bis hin zur Untrennbarkeit. Optional können weitere Walz-, Glüh- und/oder Dressier-Schritte dafür sorgen, dass die Bänder im weichgeglühten, angewalzten und/oder im kalt verfestigten Zustand mit definierten Festigkeitscharakteristiken hergestellt werden können.

Die Lagen- oder Schichtstärken können dabei variieren, typsicherweise zwischen 2 % und 98 % (der Gesamtstärke).

Die einzelnen Schichten des mehrschichtigen Materials liegen typischerweise vollflächig übereinander, das heißt sie liegen aufeinander satt auf.

Alternativ sind aber auch sogenannte "Core-Lays" mit einem umschlossenen Kern für das mehrschichtige Material realisierbar, wodurch insbesondere Rippen und/oder Rohrgrundkörper mit optimiertem Korrosionsschutz bereitgestellt werden können.

Beispielsweise kann ein zentrales oder mittleres Band etwas schmaler ausgebildet sein als die umliegenden Bänder, was dazu führt, dass das innere Band im Querschnitt einen umschlossenen Kern ausbildet.

Bei dem erfindungsgemäßen Rippenrohr handelt es sich typischerweise um ein Rippenrohr für Wärmetauscher oder -überträger, also um ein Wärmetauscher-Rippenrohr.

Es weist einen Rohrgrundkörper auf, an dessen Außenseite eine gesonderte Rippe festgelegt oder eine integrale Rippe ausgebildet ist.

Eine gesonderte Rippe bedeutet in diesem Sinne, dass das Rippenmaterial vor der Anbringung am Rohrgrundkörper unabhängig vom Rohrgrundkörper vorliegt, während eine integrale Rippe aus dem Rohrgrundkörper herausgearbeitet wird, beispielsweise durch einen Walzvorgang oder ähnliches.

Die Rippen können den Rohrgrundkörper umlaufen.

Im Fall einer gesonderten Rippe ist das entsprechende Band typischerweise wendel-, helix-, spiral- oder schraubendrehartig umlaufend, insbesondere durchgehend, an dem Rohrgrundkörper angeordnet. Bei integralen Rippen können die Rippen hingegen beispielsweise als Kreisringe am Rohrgrundkörper ausgebildet sein oder ebenfalls helixartig (durchgehend) umlaufend.

Die mehreren Schichten des mehrschichtigen Materials liegen typischerweise spaltfrei aneinander an, wobei die untrennbare Verbindung der Schichten durch Druck und/oder Temperatur bzw. nachfolgende Wärmebehandlung erzielt werden kann.

Durch die Verwendung mehrschichtigen Materials sind viele Vorteile erreichbar:
So kann es beispielsweise gewünscht sein, dass ein Rippenrohr im Inneren eine besondere Art des Korrosionsschutzes aufweist gegenüber den in seinem Inneren geführten Fluiden. Dies kann beispielsweise dadurch erreicht werden, dass ein Rohrgrundkörper aus einem mehrschichtigen Material erstellt wird, wobei das mehrschichtige Material an einer Außenseite (welche dann durch einen Umformprozess zur Innenseite des Rohrgrundkörpers werden kann) einen Werkstoff aufweist, der einen besonders guten Korrosionsschutz bietet (zum Beispiel Edelstahl).

Ein derartiger Rohrgrundkörper kann eine äußere Schicht aus einem Werkstoff aufweisen, welcher zur Wärmeübertragung besonders gut geeignet ist (beispielsweise Kupfer oder Aluminium). Aus dieser Schicht (vorzugsweise nur aus dieser Schicht) können dann insbesondere die Rippen herausgearbeitet werden.

Alternativ ist es aber auch vorstellbar, dass man Rippen aus einem Rohrgrundkörper herausarbeitet, zum Beispiel herauswalzt, wobei der Rohrgrundkörper an der Außenseite, also insbesondere im Bereich der Rippen, einen besonders guten Korrosionsschutz aufweisen soll (was beispielsweise mit Titan sehr gut möglich ist, obowohl es sich hierbei um einen sehr teuren Werkstoff handelt).

Zur Herstellung des Rohrgrundkörpers kann man also ein mehrschichtiges Material wählen, welches an einer Außenseite diesen (teuren) Werkstoff mit besonders gutem Korrosionsschutz aufweist. Um aber möglichst viel an teurem Werkstoff einzusparen, kann der Rest des Rohrgrundkörpers dann aus einem nicht ganz so teuren Material bestehen (beispielsweise Edelstahl oder Kupfer).

Wird ein derartiges, mehrschichtiges Material zu einem Rohrgrundkörper umgeformt, kann der teurere Werkstoff (welcher noch bessere Korrosionsschutz-Eigenschaften aufweist) außen liegen und aus dieser Schicht können dann die Rippen herausgearbeitet werden oder an dieser können gesonderte Rippen angebracht werden.

Insbesondere kann die äußere Schicht eines Rohrgrundkörpers eine Schichtdicke aufweisen, welche mehr oder weniger als 50 %, weiter vorzugsweise mehr oder weniger als 40 %, weiter vorzugsweise mehr oder weniger als 30 % der Gesamtdicke des mehrschichtigen Materials aufweist.

Auf diese Weise kann also beispielsweise auch eine Materialkosten-Reduktion durch den Einsatz eines mehrschichtigen, insbesondere plattierten, Materials erreicht werden.

Durch den Einsatz von Rippen aus mehrschichtigem Material, also insbesondere gesonderten Rippen, sind ebenfalls hinsichtlich ihrer Wärmeleitfähigkeit und/oder ihres Korrosionsschutzes verbesserte Rippenrohre möglich: So können die Rippen beispielsweise eine innere Schicht bzw. einen Kern aus einem besonders gut wärmeleitfähigen Werkstoff aufweisen (typischerweise Kupfer, Kupfer-Nickel, oder Aluminium).

Wird ein solches mehrschichtiges Band an einem Rohrgrundkörper verschweißt, kann auch der Rohrgrundkörper dann beispielsweise eine innere Schicht aufweisen, welche besonders gut wärmeleitfähig ist. Ein Laser kann vorzugsweise lediglich eine äußere Schicht des Rohrgrundkörpers aufschmelzen (welche beispielsweise besonders gute Korrosionseigenschaften aufweist), so dass die Rippen dann durch die äußere Schicht hindurch an der inneren, besser wärmeleitfähigen Schicht des Rohrgrundkörpers verankert werden können. So sind sogar Konfigurationen möglich, bei welchen der Kern der Rippe, also die innere Schicht der Rippe, mit einer mittleren oder inneren Schicht des Rohrgrundkörpers (wärmeleittechnisch), insbesondere unmittelbar, "verbunden" ist.

Grundsätzlich können aber auch herkömmliche Rippen aus lediglich werkstoffeinheitlichem Material an einem Rohrgrundkörper aus mehrschichtigem Material befestigt werden (also beispielsweise per Schweiß- oder Löt-Verfahren), ohne dass die Rippen dabei integral aus dem Rohrgrundkörper herausgearbeitet werden.

Zusammenfassend können also mit der vorliegenden Erfindung mehrere Ziele erreicht werden:
Je nach Wunsch kann beispielsweise eine Kostenreduktion durch Reduzierung von teureren Werkstoffen, insbesondere zum Korrosionsschutz, erreicht werden.

Außerdem können Prozessschritte substituiert werden (so braucht zur Veredlung des Rohres beispielsweise kein Rohr in ein Rohr eingeschoben zu werden).

In diesem Sinne können auch spezielle Ziele (beispielsweise die Leitung von Trinkwasser) erreicht werden, ohne dass extra Prozessschritte durchzuführen wären (wie das Einschieben von Extra-Kunststoffrohren in einen Rohrgrundkörper oder ähnliches).

Schließlich kann die Wärmeleitfähigkeit eines Rippenrohres verbessert werden, indem (beispielsweise im Inneren von Rippe und/oder Rohrgrundkörper) ein besonders gut wärmeleitfähiger Werkstoff eingesetzt werden kann (zum Beispiel Kupfer oder Aluminium), während an einer anderen Seite (zum Beispiel der Außenseite) Werkstoff eingesetzt werden kann, der in anderen Bereichen, wie beispielsweise dem Korrosionsschutz, vorteilhafter ist.

Sind gesonderte, also nicht integral ausgebildete, Rippen vorgesehen, so können diese beispielsweise aus einem Band hergestellt werden, das wendelförmig um den Rohrgrundkörper herumgewickelt wird.

Alternativ können auch mehrere Bänder verwendet werden, welche abwechselnd um den Rohgrundkörper herumlaufen.

Bei dem Einsatz mehrerer Bänder ist es grundsätzlich auch möglich, ein Band aus einem mehrschichtigen Material zu nutzen und zusätzlich ein Band aus herkömmlichem, einschichtigem Material.

Typischerweise wird beim Anbringen gesonderter Rippen ein Laserstrahl in den Kontaktbereich zwischen Rohrgrundkörper und Band eingestrahlt, welcher entweder sowohl Teile des Rohrgrundkörpers als auch des Bandes bestrahlt (nämlich zum teilweisen Aufschmelzen beider Körper zur Erzeugung eines befestigenden Schweißplasmas bzw. einer Schweißschmelze), oder aber es kann nur auf den Rohrgrundkörper eingestrahlt werden, und das Band bzw. die Rippe kann anschließend zur Befestigung in die Schmelze eingetaucht werden.

Das mehrschichtige Bandmaterial für die Rippe kann vorher beispielsweise in einer Endlosform (insbesondere als Coil oder ähnliches) aus mehrschichtigem Material vorliegen.

Es wird dann an den Rohrgrundkörper herangeführt, welcher typischerweise rotierend aufgehängt ist. Der Rohrgrundkörper kann das Band während des Berippungsvorgangs also mitnehmen, derart, dass das Band, insbesondere unter Zug, im Wesentlichen wendelförmig an dem Rohrgrundkörper angelegt und dort von einem Laser verschweißt wird.

Nach Fertigstellung eines erfindungsgemäßen Rippenrohres kann dieses (unabhängig davon ob integral oder gesonderte Rippen vorliegen) noch in eine andere endgültige Form überführt werden, beispielsweise eine Wendelform oder auch eine Ω-Form, sofern dies gewünscht ist. Ein fertiggestelltes Rippenrohr liegt nach einem Rippenfertigungsvorgang zunächst nämlich typischerweise in einer geraden, linearen, stangenartigen Form vor.

Optional kann das erfindungsgemäße Rippenrohr eine Drallstruktur in seiner Innenseite vorsehen. Diese kann vor, nach oder während der Fertigstellung der Rippen hergestellt werden (beispielsweise durch ein Durchdrücken von der Außenseite her).

Die fertiggestellten Rippenrohre können insbesondere in Wärmetauschern verbaut oder zu solchen zusammengesetzt werden oder ähnliches.

Gemäß der bevorzugsten Ausführungsform der Erfindung handelt es sich bei dem mehrschichtigem Material um ein plattiertes Material.

Vorzugsweise wurden die Schichten zur Herstellung des plattierten Matertals einem Walzvorgang unterzogen (gegebenenfalls unter gleichzeitiger und/oder nachfolgender Temperatureinwirkung). Alternativ sind aber auch plattierte Materialien bekannt, bei welchen ein Aufschweißen, Angießen, Tauchen, Sprengplattieren, oder Galvanotechnisches Plattieren erfolgt (wobei üblicherweise aber das Aufwalzverfahren genutzt wird).

Bevorzugt werden vollflächig plattierte Materialien, also Materialien bei welchen die Schichten satt aufeinanderliegen.

Alternativ sind aber auch Ausführungen nutzbar, welche zum Beispiel einer Konfiguration mit umschlossenem Kern entsprechen (oder ähnlichem).

Vorteilhafterweise ist es vorgesehen, dass die Schichten des mehrschichtigen Materials sämtlich aus metallischen Werkstoffen (also aus Metall oder einer Legierung) bestehen. Dies soll insbesondere als Abgrenzung zu Verbundprodukten verstanden werden, bei welchen Kunststoff-Inliner verwendet werden und ähnliches.

Die Schichten sind dabei typischerweise untrennbar aneinander angeordnet bzw. unlöslich, was insbesondere auch durch den Einsatz von Druck gegebenenfalls in Verbindung mit Temperatur, bei dem Plattierverfahren erreicht wird.

Gemäß der bevorzugtesten Ausführungsform der Erfindung weist das mehrschichtige Material mindestens eine Schicht aus der folgenden Gruppe an Werkstoffen auf:
- Kupfer,
- Aluminium,
- (Edel-)Stahl,
- (Kupfer-)Nickel,
- Titan,
- Messing,
- Bronze.

Typischerweise weist das mehrschichtige Material dabei mehrere Schichten auf, wobei insbesondere sämtliche Schichten aus der genannten Gruppe an Werkstoffen bestehen.

Die genannten Werkstoffe wie Kupfer, Aluminium, Titan, Nickel, etc. können beispielsweise im Wesentlichen in Reinform vorliegen oder als Legierung.

Stahl kann beispielsweise vorzugsweise in Form von Edelstahl genutzt werden, was relativ gute Korrosionsschutz-Eigenschaften aufweist.

Die Gruppe kann grundsätzlich noch um andere Metalle oder Legierungen erweiterbar sein, wie beispielsweise Silber, Gold, oder ähnliche Metalle, welche für den Rippenrohr-Einsatz geeignet sind.

Mehrschichtiges Material kann dabei natürlich mehrere Schichten aus demselben Werkstoff aufweisen, jedenfalls sofern noch eine weitere Schicht aus einem anderen Werkstoff vorhanden ist.

Gemäß einer besonders vorteilhaften Ausgestaltung der Erfindung weist das Rippenrohr im Anbindungsbereich der Rippen am Rohrgrundkörper eine Schmelze auf. Hierbei handelt es sich typischerweise um eine ausgehärtete Schmelze. Diese Schmelze entsteht beim Anbringen eines Bandes zur Ausbildung einer gesonderten Rippe, beispielsweise durch einen Laserschweißprozess. Hierbei kann Material vom Rohrgrundkörper und/oder der Rippe aufgeschmolzen werden.

Die ausgehärtete Schmelze eines Rippenrohres lässt nachträglich typischerweise also Rückschlüsse über den Anbringungsvorgang der Rippe am Rohrgrundkörper zu.

Vorteilhafterweise kann dabei vorgesehen sein, dass die Schmelze kein aufgeschmolzenes Material/keinen aufgeschmolzenen Werkstoff der innersten Schicht des Rippen-Bandes und/oder des Rohrgrundkörpers enthält.

In einem ersten Fall kann das Rippen-Band also einen Kern eines Werkstoffes enthalten, welcher beim Verschweißen nicht mit aufgeschmolzen bzw. nicht erreicht wird.

In einem zweiten Fall kann eine innere oder die innerste Schicht des Rohrgrundkörpers beim Verschweißen nicht erreicht bzw. aufgeschmolzen werden (hier würde dann beispielsweise lediglich die äußerste Schicht des Rohrgrundkörpers aufgeschmolzen).

Grundsätzlich können auch beide Fälle kombinierbar sein.

Alternativ kann aber auch gerade die innerste/eine innere Schicht des Rippen-Bandes und/oder des Rohrgrundkörpers bei einem Schmelzprozess erreicht werden, so dass die Schmelze gerade Material/Werkstoff dieser Schicht des Bandes und/oder des Rohrgrundkörpers enthält.

Letzterer Fall kann dazu genutzt werden, gut wärmeleitendes Material der innersten Schicht des Bandes mit einer inneren Schicht des Rohrgrundkörpers für eine bessere Wärmeleitung zu verbinden.

Gemäß einer alternativen Ausgestaltung der Erfindung kann der Rohrgrundkörper aus dem mehrschichtigen Material bestehen, wobei die Rippen aus diesem herausgewalzt werden bzw. sind.

Vorzugsweise werden die Rippen dabei lediglich aus einer äußeren Schicht des Rohrgrundkörpers herausgewalzt, so dass eine innere oder die innerste Schicht des Rohrgrundkörpers durch den Walzvorgang im Wesentlichen nicht beeinträchtigt bzw. verformt wird.

Alternativ ist es aber auch möglich, bei einem Walzvorgang über mehrere Schichten des Rohrgrundkörpers zu walzen, so dass die Rippen jedenfalls Anteile beider oder mehrerer Schichten des Rohrgrundkörpers (jedenfalls im Querschnitt) aufweisen.

Gemäß einem weiteren Aspekt der Erfindung betrifft diese ein Verfahren zur Herstellung eines Rippenrohres.

Die Besonderheit besteht dabei insbesondere aus den folgenden Verfahrensschritten:
- Bereitstellen, insbesondere Herstellen, von mehrschichtigem, vorzugsweise plattiertem, Material,
- Anbringen oder Ausbilden von Rippen an einem Rohrgrundkörper unter Verwendung des mehrschichtigen Materials.

An dieser Stelle sei angemerkt, dass sämtlich Vorteile, welche in Verbindung mit dem Vorrichtungsansprüchen 1 bis 7 beschrieben wurden, analog auch auf das erfindungsgemäße Verfahren übertragen werden können (und umgekehrt), wobei diese Vorteile und Ausführungen lediglich der Übersichtlichkeit der vorliegenden Patentanmeldung halber nicht im Bezug auf das erfindungsgemäße Verfahren wiederholt werden.

Das erfindungsgemäße Verfahren weist hierbei vorzugsweise einen Verfahrensschritt auf, nach welchem zunächst mehrschichtiges Material bereitgestellt wird.

Insbesondere kann das Verfahren einen Schritt des Herstellens eines solchen Materials umfassen.

Beispielsweise kann plattiertes Material erstellt werden, indem verschiedene Bänder unter Druck und/oder Wärmezufuhr zusammengebracht werden.

Vorzugsweise kann dieser Verfahrensschritt einen weiteren Verfahrensschritt des Walzens unterschiedlicher Bänder (wobei jedes Band einer späteren Schicht des mehrschichtigen Materials entspricht) aufweisen.

Das mehrschichtige Material kann nach dessen Bereitstellung oder Herstellung insbesondere weiterverarbeitet, insbesondere umgeformt, werden, beispielsweise zu einem Rohrgrundkörper.

So kann ein Rohrgrundkörper aus mehrschichtigem Material beispielsweise durch Umformung (und ein anschließendes Verschweißen) erstellt werden.

In diesem Sinne kann das erfindungsgemäße Verfahren auch den Verfahrensschritt des Herstellens eines Rohrgrundkörpers aus einem mehrschichtigen, insbesondere plattierten, Material umfassen.

Ein für den Einsatz einer Rippe ausgebildetes Band unterliegt vorher typischerweise keiner Umformung, weil das bereitgestellte, plattierte Material typischerweise schon in Bandform vorliegt. Gegebenenfalls wird dies noch auf eine gewünschte Breite zurecht geformt bzw. geschnitten.

Erfindungsgemäß werden so dann die Rippen an einem Rohrgrundkörper ausgebildet oder angebracht. Beim Anbringen kann es sich beispielsweise um einen Verschweißvorgang für gesonderte Rippen (bereitgestellt von einem Band) handeln, beim Ausbilden von Rippen beispielsweise um das Auswalzen von Rippen an einem Rohrgrundkörper.

In jedem Fall wird das mehrschichtige Material, welches entweder die Rippen und/oder den Rohrgrundkörper bereitstellt, hierbei verwendet (und sei es nur als Bestandteil des Rohrgrundkörpers, an dem materialeinheitliche Rippen befestigt werden).

Werden gesonderte Rippen befestigt, so können diese beispielsweise wendelförmig an dem Rohrgrundkörper festgelegt werden, insbesondere durch einen Schweißvorgang, beispielsweise mithilfe eines Faserlasers oder eines anderen geeigneten Lasers.

Werden integrale Rippen ausgebildet, so können diese beispielsweise ausschließlich aus der äußeren Schicht des Rohrgrundkörpers herausgewalzt werden (oder alternativ auch aus mehreren Schichten des Rohrgrundkörpers).

Mehrschichtiges Material kann bei einer Verwendung als Rippenrohr bspw. den Vorteil bieten, dass ein zusätzlicher Arbeitsschritt einer Innenversieglung des Rohres entfallen kann (nämlich indem die innere Schicht eines mehrschichtigen Materials entsprechend gewählt wird).

Ein mehrschichtiges Material bedeutete im Sinne der Erfindung insbesondere, dass Schichten unterschiedlicher bzw. mehrerer Werkstoffe in dem Material vorhanden sind.

Gemäß einem besonders bevorzugten, erfindungsgemäßen Verfahren umfasst dieses auch noch den Schritt der Auswahl von mindestens zwei Ausgangswerkstoffen für das mehrschichtige Material, in Abhängigkeit von den sich aus dem gewünschten Einsatz des herzustellenden Rippenrohres ergebenden Anforderungen.

Mit anderen Worten wird bei der Bereitstellung oder der Herstellung, mithin bei der Auswahl des mehrschichtigen Materials, darauf geachtet, wie die Anforderung an den Einsatzfall des herzustellenden Rippenrohres sind:
In Abhängigkeit dieser Anforderungen, welche ein Nutzer zunächst feststellen muss, kann er dann ein geeignetes, mehrschichtiges Material auswählen oder aber (beispielsweise sofern dieses so noch gar nicht existiert) die Ausgangsmaterialien für das mehrschichtige Material vorgeben (anhand derer dann das mehrschichtige Material hergestellt, zum Beispiel plattiert, wird).

Je nach Anforderungen kann der Nutzer mindestens zwei Ausgangswerkstoffe auswählen und dann entweder mehrschichtiges Material herstellen oder zwischen bereitgestellten mehrschichtigen Materialien wählen (welche aus diesen ausgewählten Werkstoffen bereits hergestellt sind).

Dies kann sowohl das mehrschichtige Material betreffen, welches für die Bereitstellung einer gesonderten Rippe genutzt wird, und/oder dasjenige welches für die Herstellung des Rohrgrundkörpers (an welchem eine gesonderte Rippe angebracht oder eine integrale Rippe ausgebildet wird) genutzt wird.

Weitere Vorteile der Erfindung ergeben sich aus den nicht zitierten Unteransprüchen sowie aus der nachfolgenden Beschreibung der in den Figuren dargestellten Ausführungsbeispiele. Darin zeigen:
- Fig. 1: in einer sehr schematischen Seitenansicht den Vorgang der Herstellung des mehrschichtigen Materials (wie es bei erfindungsgemäßen Rippenrohren verwendet wird),
- Fig. 2: in einer sehr schematischen Querschnittsansicht, etwa entlag Ansichtspfeil II in Fig. 1, eine erste Konfiguration eines mehrschichtigen Materials, beispielsweise verwendbar zur Herstellung von Rippen eines erfindungsgemäßen Rippenrohrs,
- Fig. 3: in einer Ansicht etwa gemäß Fig. 2, ein Querschnitt eines zweiten Ausführungsbeispiels eines mehrschichtigen Materials, beispielsweise zur Herstellung eines Rohrgrundkörpers,
- Fig. 4: in einer Ansicht etwa gemäß Fig. 3, ein weiteres Ausführungsbeispiel eines mehrschichtigen Materials in einer "Corelay"-Konfiguration mit umschlossenem Kern, insbesondere zur Herstellung von Rippen,
- Fig. 5: in einer Ansicht etwa gemäß Fig. 4, ein weiteres Ausführungsbeispiel eines mehrschichtigen Materials,
- Fig. 6: in einer sehr schematischen, teilgeschnittenen Seitenansicht ein erfindungsgemäßes Rippenrohr in einer geraden bzw. noch ungeformten Ausgestaltung,
- Fig. 7: ein ebenfalls schematischer, vergrößerter Ausschnitt des erfindungsgemäßen Rippenrohrs unter Darstellung einer einzelnen Rippe,
- Fig. 8: der Abschnitt gemäß Kreis VIII in Fig. 7 in vergrößerter Darstellung unter Hinzufügung einer weiteren, noch nicht verschweißten Rippe, links von der in Fig. 7 dargestellten, bereits befestigten Rippe, bei einer Rippe in "Core-Lay"-Konfiguration,
- Fig. 9: in einer Ansicht etwa gemäß Fig. 8, ein anderes Ausführungsbeispiel mit einer vollflächig plattierten Rippe,
- Fig. 10: in einer Ansicht etwa gemäß Fig. 9, ein weiteres Ausführungsbeispiel, nach welchem die Rippe zwecks Befestigung in ein Schmelzbad des Rohrgrundkörpers eingetaucht wird,
- Fig. 11: in einer Ansicht gemäß Fig. 10, ein Verfahren, etwa gemäß dem in Fig. 10 beschriebenen, mit dem Unterschied, dass die äußerste Schicht des Rohres dünner ist und ganz aufgeschmolzen wird,
- Fig. 12: in einer sehr schematischen Ansicht, etwa gemäß Ansichtspfeil XII in Fig. 13, der Querschnitt durch einen Rohrgrundkörper aus mehrschichtigem Material zur Herstellung eines erfindungsgemäßen Rippenrohres, und
- Fig. 13: der Rohrgrundkörper gemäß Fig. 12 in einer schematischen, geschnittenen Seitendarstellung unter zusätzlicher Darstellung eines Scheibenpaketes zur Ausarbeitung von integralen Rippen aus dem Rohrgrundkörper.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben oder von Apostrophen, bezeichnet.

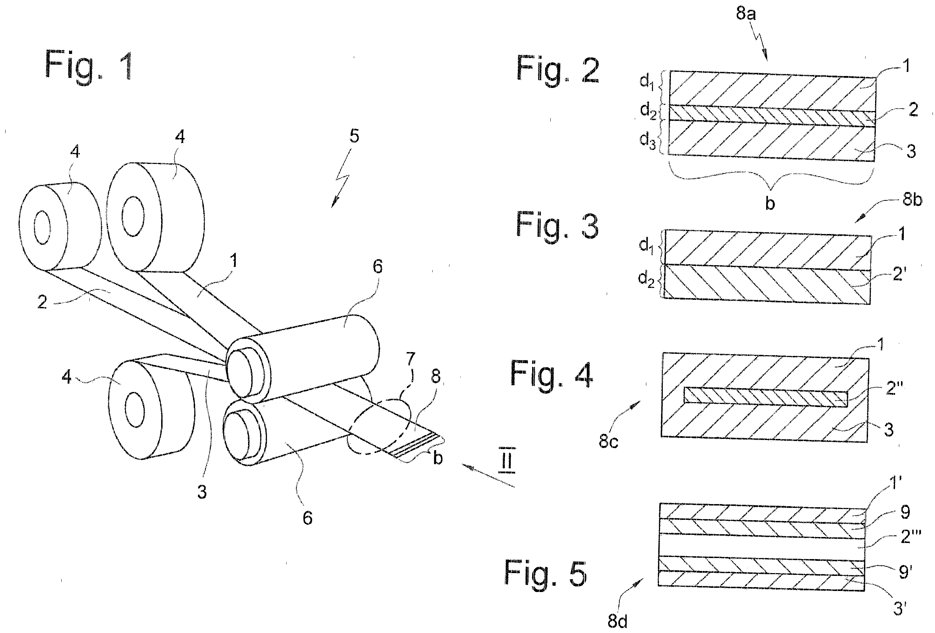

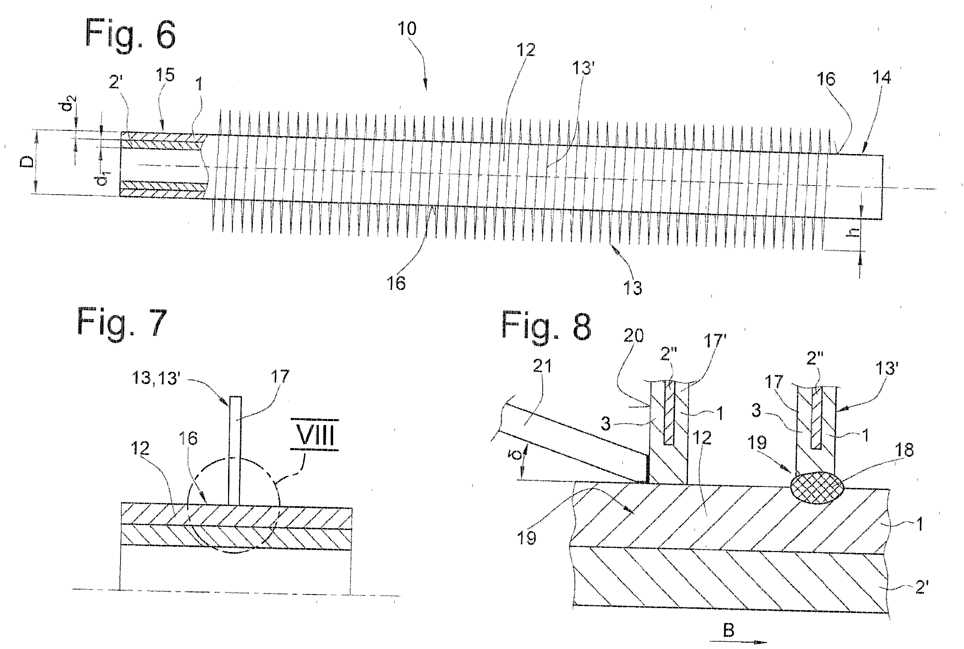

Fig. 1 zeigt zunächst in einer sehr schematischen Darstellung ein Verfahren zur Herstellung eines mehrschichtigen Materials 8, weiches zur Herstellung der Rippen 13 und/oder des Rohrgrundkörpers 12 eines in Fig. 6 dargestellten, erfindungsgemäßen Rippenrohres 10 dient.

Ausweislich Fig. 1 werden hierzu drei Werkstoffe 1, 2, 3 genutzt, welche beispielsweise zunächst in Form von Endlosmaterial, vorzugsweise nach Art eines Vorrats 4 vorliegen können (beispielsweise nach Art einer Coil, von welcher sie dann abziehbar sind).

Die Werkstoffe 1, 2, 3 liegen hierbei exemplarisch nach Art von Bändern vor, insbesondere nach Art von metallischen Bändern, also nach Art von Bändern aus Metall und/oder Metalllegierungen.

Der Einfachheit halber soll vorliegend angenommen werden, dass es sich bei dem Werkstoff 1 um einen Edelstahl handelt, bei dem Werkstoff 3 um (den gleichen) Edelstahl und bei dem Werkstoff 2 um Kupfer. Dies ist jedoch lediglich exemplarisch zu verstehen. Tatsächlich ist jede Konfiguration unterschiedlicher Werkstoffe, weiche zur Herstellung von Rippenrohrbestandteilen geeignet sind, möglich.

Insbesondere müssen sich demnach auch der Werkstoff 1 und der Werkstoff 3 nicht gleichen. Grundsätzlich können hier auch völlig verschiedene Werkstoffe gewählt werden, je nach gewünschtem Einsatzfall.

Jedenfalls werden die vorliegenden Bänder aus den Werkstoffen 1, 2, 3 (es können natürlich auch lediglich zwei Werkstoffe oder mehr als drei Werkstoffe, insbesondere in Form von Bändern, vorliegen) einem Plattiergerüst 5 zugeführt, welches zum Beispiel mehrere Walzkörper 6 vorsehen kann.

Zwischen den Walzkörpern 6 werden die bandartigen Werkstoffe 1, 2, 3, gegebenenfalls unter Wärmezufuhr, zusammengewalzt. Optional ist einem in Fig. 1 mit dem Bezugszeichen 7 versehenen Bereich dann auch noch eine nicht näher dargestellte anschließende Wärmebehandlung möglich, welche die Haftfestigkeit zwischen den einzelnen Werkstoffen 1, 2, 3 noch verbessern kann.

Auf diese Weise entsteht ein bandartiges, mehrschichtiges Material 8, dessen in Fig. 2 dargestellter Querschnitt 8a für das vorliegende erste Ausführungsbeispiel (entsprechend der Konfiguration in Fig. 1) dreilagig ausfällt, also in einer Konfiguration mit drei Schichten.

Gemäß Fig. 2 liegt eine sogenannte vollflächige Plattierung vor, bei welcher die Werkstoffe 1, 2, 3 der einzelnen Schichten jeweils vollflächig aufeinanderliegen. Mit anderen Worten erstreckt sich jede Werkstoffschicht über die gesamte Breite b des Materials 8.

Die Dicken d der einzelnen Werkstoffschichten können dabei unterschiedlich sein, wobei die jeweiligen Ausgangsbänder eines Vorrats 4 die letztendliche Schichtdicke im Wesentlichen vorgeben (im vorliegenden Ausführungsbeispiel gemäß Fig. 2 waren die Ausgangsbänder 1 und 3 gemäß Fig. 1 dementsprechend dicker als das mittlere Band 2).

Alternativ kann eine Schicht auch aus mehreren Bändern des gleichen Werkstoffes hergestellt werden.

Fig. 2 zeigt ein dreilagiges Band mit zwei äußeren (identischen) Werkstoffschichten 1 und 3 und einer mittleren Werkstoffschicht 2.

Beispielsweise kann es sich bei den Werkstoffschichten 1 und 3 um Edelstahlschichten handeln, bei der Werkstoffschicht 2 um eine Kupferschicht.

Eine andere Konfiguration eines mehrschichtigen Materials 8 zeigt Fig. 3: Dieses mehrschichtige Material 8b besteht dabei lediglich aus zwei Schichten unterschiedlicher Werkstoffe, nämlich einer ersten Werkstoffschicht 1 und einer zweiten Werkstoffschicht 2'.

Diese Schichten weisen hierbei lediglich exemplarisch identische Schichtdicken d₁ und d₂ auf, welche aber selbstverständlich auch voneinander abweichen können.

Beispielsweise kann es sich bei der Schicht 1 um Edelstahl handeln, bei der Schicht 2' um Kupfer. Eine solche, in Fig. 3 dargestellte, Konfiguration kann beispielsweise dafür geeignet sein, um aus einem derartigen Material einen Rohrgrundkörper eines erfindungsgemäßen Rippenrohres herauszuarbeiten/zu formen.

Fig. 4 zeigt dann eine Konfiguration eines mehrschichtigen Materials 8c, welches typischerweise eher für die Ausbildung von Rippen genutzt wird.

Ähnlich zu Fig. 2 zeigt Fig. 4 dabei eine Konfiguration, bei welcher oben und unten eine Schicht eines identischen Werkstoffes 1, 3 vorhanden ist (beispielsweise Edelstahl) und mittig ein Kern eines anderes Materials 2" (beispielsweise Kupfer).

Im Gegensatz zu der Anordnung gemäß Fig. 2 zeigt die Konfiguration gemäß Fig. 4 eine sogenannte "Core-Lay"-Konfiguration bzw. einen umschlossenen Kern 2", insbesondere in dem Sinne, dass die obere und untere Schicht 1 und 3 an den Seiten (bezüglich der Breite b) ineinander übergehen und die mittlere Schicht 2" somit umschließen. Die zur Herstellung verwendeten Bänder 1 und 3 wären in diesem Fall einfach etwas breiter als das Band 2.

Eine solche Konfiguration kann, ähnlich der Konfiguration gemäß Fig. 2, besonders gut zur Ausbildungen von Rippen bei Rippenrohren genutzt werden.

Lediglich rein exemplarisch zeigt Fig. 5 dann eine weitere Konfiguration eines mehrschichtigen Materials 8d, welches rein beispielhaft aus fünf Schichten besteht. Ebenfalls rein exemplarisch ist der Aufbau hierbei orthogonal zur Breite b bzw. senkrecht zur Seite b symmetrisch aufgebaut, mit identischen äußeren Schichten 1' und 3', identischen anschließenden Schichten 9 und 9' und einer mittleren Schicht 2‴ aus einem dritten Werkstoff (oder aber aus dem Werkstoff der außen liegenden Schichten 1' und 3'). Hier sind viele Konfigurationen denkbar und Fig. 5 soll nur andeuten, dass die Erfindung nicht auf zwei oder drei Schichten begrenzt ist.

Fig. 6 zeigt dann ein bereits fertig gestelltes Rippenrohr 10, welches dem Grunde nach aus zwei separaten Stücken hergestellt worden ist: So ist zunächst ein Rohrgrundkörper 12 vorgesehen, welcher als gerades Rundrohr ausgebildet ist. Um den Grundkörper 12 ist ein mehrschichtiges Band 13' wendelförmig gewickelt und an dem Rohrgrundkörper 12 verschweißt. Das Band 13' bildet hierdurch also eine endlose Rippenanordnung 13 aus Rippen 17 aus (wobei das Band 13' natürlich tatsächlich eine endliche, festgelegte Länge aufweist; die Rippen 17 sind mit anderen Worten durchgängig ausgebildet).

Das Band 13' lässt ausweislich Fig. 6 die Enden 14 und 15 des Rohrgrundkörpers 12 freistehen und ist an der Oberfläche 16 des Rohrgrundkörpers 12 verschweisst. Dieser ist, wie bereits erwähnt und insbesondere an dem linken Ende 15 des Rohrgrundkörpers 12 in der teiltransparenten Darstellung ersichtlich, hohl ausgebildet mit einer ersten, inneren Wandstärke d₁, einer äußeren Wandstärke d₂ (somit einer Gesamtwandstärke d₁ + d₂) und einem Durchmesser - D. Die Rippenanordnung 13 weist hierbei eine Rippenhöhe h auf.

Der mittlere Abstand a zwischen zwei benachbarten Rippen 17 kann je nach Anforderung gewählt sein. Beispielsweise kann ein mittlerer Abstand a von bis zu sechs Millimeter erreicht werden (bzw. eine Steigung von weniger als fünf Rippen/Zoll). insbesondere kann eine Steigung von zwischen 5 bis 13 Rippen/Zoll erreicht werden (was einem mittleren Abstand a von zwischen etwa 2 mm und 5 mm entspricht). Dies ist jedoch lediglich beispielhaft zu verstehen.

Das erfindungsgemäße Verfahren kann zudem bei einer variablen Beabstandung der Rippen an dem Rohr eingesetzt werden (bzw. bei einer variablen Steigung an einem Rohr). Hierzu kann die Vorschub- und/oder die Rotationsgeschwindigkeit des Rohres variiert werden. Die größten Abschnitte a zwischen benachbarten Rippen können hierbei beispielsweise die oben angegebenen Werte annehmen. Grundsätzlich können die Abstände jedoch auch sehr viel kleiner sein als oben angegeben, unabhängig davon, ob eine variable Beabstandung vorgesehen wird oder nicht.

Das erfindungsgemäße Herstellungsverfahren für das Rippenrohr 10 wird nun anhand der Figuren 7 bis 11 näher erläutert werden.

Hierbei zeigt Fig. 7 zunächst in einer rein schematischen, teilgeschnittenen Darstellung die vergrößerte Einzeldarstellung einer bereits verschweißten Rippe 17. Die Rippe 17 ist in dem dargestellten Bereich an der Rohroberfläche 16 verschweißt.

Fig. 8 zeigt in ihrem rechten Darstellungsbereich besagte Rippe 17 im bereits verschweißten Zustand. Fig. 3 lässt dabei die bereits erstarrte Schmelze 18 im Kontaktbereich 19 zwischen Rohrgrundkörper 12 und Band 13 erkennen. Die Schmelze 18 besteht anteilig aus Material sowohl des Rohrgrundkörpers 12 als auch des Bandes 13' bzw. der Rippe 17 (an deren Unterseite).

Die Rippe 17 ist hierzu im Querschnitt in etwa rechteckig ausgebildet.

Die in Fig. 8 rechtsseitig dargestellte Rippe 17 befindet sich in Berippungsrichtung B (als bereits festgelegte Rippe) weiter vorne als eine in Fig. 8 ebenfalls dargestellte Rippe 17'. Diese Rippe 17' wird in Fig. 8 gerade in dem Kontaktbereich 19 (welcher aufgrund der geraden Rohroberfläche 16 und der geraden Seitenkante 20 der Rippe 17' im Wesentlichen L-förmig ausgebildet ist) verschweisst.

Hierzu fällt ein Faserlaserstrahl 21 eines in Fig. 8 nicht dargestellten Faserlasers unter einem Winkel δ, insbesondere einem geringen Winkel δ, auf den Kontaktbereich 19. Der Faserlaserstrahl 21 bestrahlt hierbei sowohl Material des Bandes 13' bzw. der Rippe 17' als auch Material des Rohrgrundkörpers 12, insbesondere an dessen Oberfläche 16.

Da sich die Rippe 17 in Berippungsrichtung B vor der Rippe 17' befindet, stellt der linke Abschnitt gemäß Fig. 8 sozusagen den Zustand des -Verschweißens eines Abschnittes des Bandes dar und die rechte Seite gemäß Fig. 8 dann den fertigen, angeschweißten Zustand eines Abschnittes des Bandes. Weitere Abschnitte des Bandes würden sich natürlich insbesondere in Berippungsrichtung B (und somit bereits verschweißt) mit definierter Rippensteigung anschließen.

Bezugnehmend auf die Fig. 6 bis 8 sei an dieser Stelle angemerkt, dass das vorliegend dargestellte Rippenrohr 10 sowohl einen Rohrgrundkörper 12 als auch Rippen 17 aus einem mehrschichtigen Material aufweist.

Dies ist lediglich exemplarisch zu verstehen. In anderen, gleichfalls als offenbart geltenden Ausführungsbeispielen kann der Rohrgrundkörper 12 beispielsweise lediglich aus einschichtigem Material bestehen (wobei man sich dann beispielsweise die mit der Bezugsziffer 2' versehene Schicht der Dicke d₁ fortgelassen vorstellen müsste).

Alternativ könnte zwar ein mehrschichtiger Rohrgrundkörper 12 verwendet werden, aber herkömmliche Rippen 17 aus lediglich einem Werkstoff (in welchem Fall der Querschnitt der Rippen 17, 17' in Fig. 8 dann naturgemäß anders aussehen würde, nämlich ohne Kern).

Das vorliegende Ausführungsbeispiel zeigt nun aber gerade ein Rippenrohr 10 bei welchem sowohl der Rohrgrundkörper 12 als auch die Rippen 17 aus mehrschichtigem Material bestehen:
So zeigt Fig. 6, dass der Rohrgrundkörper 12 aus einem mehrschichtigen Material besteht, wie es beispielsweise in Fig. 3 im Querschnitt gezeigt ist.

Ein solches Material gemäß Fig. 3 kann zu einem Rohrgrundkörper weiterverarbeitet werden, indem ein entsprechendes Band beispielsweise gebogen/gewalzt, und dann an sich befestigt (beispielsweise verschweißt) wird oder ähnliches. Hierauf soll die Erfindung aber nicht beschränkt sein. Es sind alle denkbaren anderen Möglichkeiten umfasst, aus einem mehrschichtigen Material einen Rohrgrundkörper herzustellen.

Fig. 6 zeigt dabei jedenfalls, dass der Rohrgrundkörper 12 hierdurch eine äußere Schicht eines ersten Werkstoffes 1 aufweist sowie eine innere Schicht eines zweiten Werkstoffes 2'. Beispielsweise kann es sich bei der äußeren Schicht 1 um Edelstahl handeln, bei der inneren Schicht 2' um Kupfer oder Aluminium oder ähnliches.

Der Rohrgrundkörper 12 besteht mithin in diesem Ausführungsbeispiel aus plattiertem Material, wobei auch andere mehrschichtige Materialien als offenbart gelten sollen.

Ausweislich Fig. 8 bestehen auch die Rippen 17 bzw. 17' aus einem mehrschichtigen Material, insbesondere einem mit einem Querschnitt gemäß Fig. 4.

Fig. 8 lässt also erkennen, dass die Rippen 17 und 17' außen eine Schicht 1 bzw. 3 eines ersten Werkstoffs aufweisen und eine innere Schicht bzw. einen Kern aus einem zweiten Werkstoff 2".

Bei dem Kern 2" kann es sich beispielsweise um einen sehr gut wärmeleitenden Werkstoff handeln, wie Kupfer. Bei dem Werkstoff der äußeren Schichten 1 und 3 handelt es sich typischerweise um einen sehr gut korrosionsbeständigen Werkstoff (wie Edelstahl).

Fig. 8 zeigt dabei eine Konfiguration mit einem umschlossenen Kern (also eine "Core-Lay"-Konfiguration), welche vorliegend beispielsweise den Vorteil aufweist, dass während des in Fig. 8 dargestellten Schweißprozesses die innere Schicht 2" nicht mit aufgeschmolzen wird, und somit nicht mit ihrem Werkstoff in die Schmelze 18 eingeht. Genau dies kann in bestimmten Anwendungsfällen gewünscht sein.

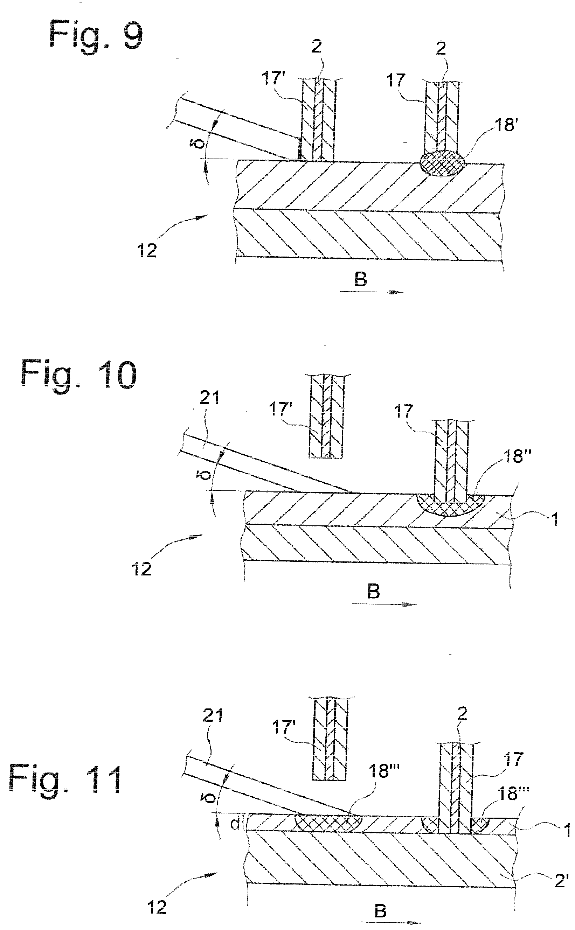

In anderen Einsatzfällen kann der umgekehrte Effekt gewünscht sein: So zeigt Fig. 9 eine Abwandlung des in Fig. 8 dargestellten Ausführungsbeispiels, bei welchem die Rippen 17 und 17' nicht die Konfiguration gemäß Fig. 4 aufweisen, sondern eine Konfiguration gemäß Fig. 2, bei welcher die Schicht 2 des mehrschichtigen Materials 8a dieselbe Breite aufweist wie die sie umgebenden Schichten (so dass keine "Core-Lay"-Konfiguration vorliegt, sondern eine vollflächige Plattierung).

Dies hat insbesondere zur Folge, dass nun auch gerade Werkstoff der zentralen Schicht 2 mit in die Schmelze 18' eingeht. Eine derartige Ausbildung könnte den Vorteil aufweisen, dass die Wärme aus den Rippen besser in den Rohrgrundkörper 12 eingeleitet werden kann.

Fig. 10 zeigt ein drittes Ausführungsbeispiel für gesonderte Rippen 17 bzw. 17', welche an einem Rohrgrundkörper 12 festgelegt werden. Dieses Ausführungsbeispiel unterscheidet sich von dem Ausführungsbeispielen gemäß Fig. 8 und 9 dahingehend, dass hier während des Schweißvorgangs durch den Laserstrahl 21 zunächst ausschließlich Material des Rohrgrundkörpers 12 aufgeschmolzen wird (und somit kein Material der Rippe 17 bzw. des Bandes 13'). Nachdem auf diese Weise eine Schmelze 18" im Rohrgrundkörper 12, insbesondere in dessen äußerster Schicht 1, erzeugt wurde, wird die Rippe 17 bzw. 17' zwecks Befestigung einfach in die noch nicht erstarrte Schmelze 18" hineingetaucht.

Da dies alles in sehr kurzen Zeitabständen erfolgt, kann auch auf diese Weise eine Festlegung von gesonderten Rippen an dem Rohrgrundkörper durchgeführt werden.

Schließlich zeigt Fig. 11 noch eine weitere Konfiguration, welche im Wesentlichen der Konfiguration gemäß Fig. 10 entspricht. Im Unterschied zu Fig. 10 wird bei dem Verfahren gemäß Fig. 11 jedoch ein Rohrgrundkörper 12 verwendet, welcher eine sehr viel dünnere äußere Schicht eines ersten Werkstoffs 1 aufweist.

In diesem Sinne lässt Fig. 11 erkennen, dass der Laserstrahl 21 diese Schicht 1 über die gesamte Dicke d aufschmilzt, insbesondere ohne wesentlich in die darunterliegende Schicht 2' einzudringen (je nach Genauigkeit und Wunsch ist es aber auch unproblematisch, wenn ein geringer Teil der Schicht 2' angeschmolzen wird).

Das Verfahren gemäß Fig. 11 entspricht deswegen im Wesentlichen demjenigen gemäß Fig. 10, da hier die Rippen 17 bzw. 17' im Wesentlichen nicht angeschmolzen werden.

Die Rippen werden auch hier nämlich anschließend in die Schmelze 18‴ "eingetaucht".

Da sich die Schmelze 18‴ über die gesamte Schichtdicke d der Schicht des ersten Materials 1 erstreckt, kann die zentrale Schicht 2 der Rippe 17 an die unten liegende bzw. innere Schicht 2' des Rohrgrundkörpers 12 anstoßen bzw. mit dieser in Kontakt geraten.

Beispielsweise können die Schichten 2 und 2' (zum Zwecke einer optimierten Wärmeleitung) aus demselben Material, vorzugsweise Kupfer oder Aluminium, bestehen.

Zusammenfassend kann bei der Ausführung gemäß Fig. 11 also eine thermische/werkstoffeinheitliche Brücke zwischen dem Kern einer Rippe und einer inneren Schicht eines Rohrgrundkörpers erzeugt werden, was die Wärmeleitfähigkeit des entstehenden Rippenrohres noch verbessert.

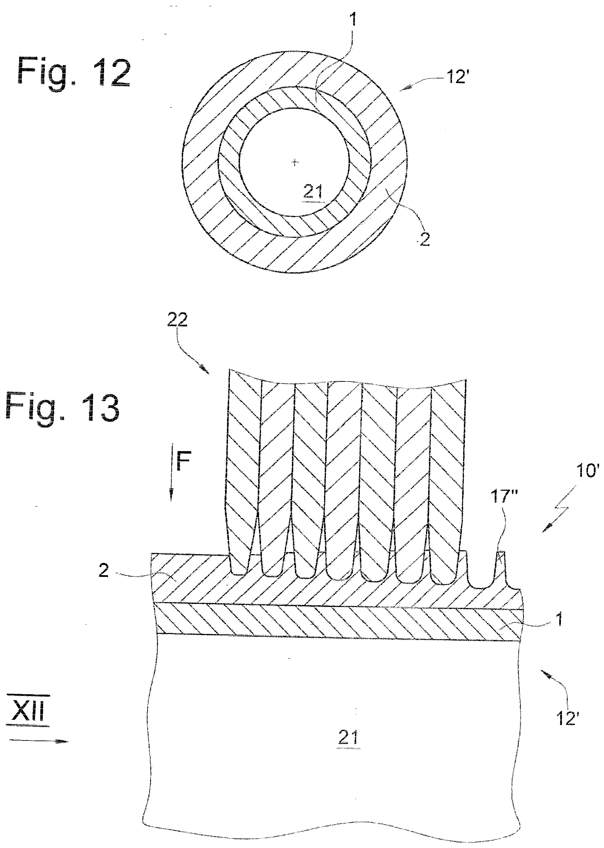

Ein andersartiges Verfahren, ein erfindungsgemäßes Rippenrohr 10' mit integralen Rippen 17" herzustellen zeigen dann die Fig. 12 und 13.

Fig. 12 zeigt hierbei im Querschnitt einen Rohrgrundkörper 12' mit einer inneren (insbesondere dünneren) Schicht eines ersten Werkstoffes 1 und einer äußeren (insbesondere dickeren) Schicht eines zweiten Werkstoffes 2.

Lediglich beispielsweise kann es sich bei dem Werkstoff 1 um Edelstahl handeln, welcher eine besonders gute Korrosionsbeständigkeit gegenüber dem im Inneren 21 des Rohrgrundkörpers 12' zu leitenden Fluides (beispielsweise Wasser oder ähnlichem) aufweist.

Bei dem äußeren Werkstoff 2 kann es sich um einen Werkstoff handeln, welcher besonders gut zur integralen Ausbildung von Rippen geeignet ist, beispielsweise Kupfer.

Dies zeigt Fig. 13 in einer sehr schematischen, geschnittenen Seitenansicht:
Fig. 13 verdeutlicht diesbezüglich, dass die äußere Schicht 2 eine größere Materialstärke/Dicke aufweist als die innere Schicht 1. Dies ist insbesondere typisch, da aus der äußeren Schicht 2 Rippen 17" herausgeformt werden sollen, wozu einiges an Materialstärke nötig ist.

Außerdem ist die innere Schicht 1 in der Regel aus einem wertvolleren Material ausgestaltet und wird daher aus Kostengründen dünner ausgebildet.

In Fig. 13 ist ein Walzwerkzeug 22 lediglich angedeutet. Hierbei kann jedes geeignete Walzwerkzeug eingesetzt werden, welches in der Lage ist, Rippen 17" aus dem Rohrgrundkörper 12' auszuformen, insbesondere unter Einsatz einer Druckbeaufschlagung des Rohrgrundkörpers 12'. Beispielsweise weist das dargestellte Werkzeug 22 hierzu mehrere Scheiben(-pakete) auf.

Während des Walzprozesses wird der Rohrgrundkörper 12' typischerweise auf einem nicht dargestellten Walzdorn gelagert, wobei insbesondere die innere Schicht 1 unmittelbar auf besagtem Walzdorn aufliegen kann.

Dieser nicht dargestellte Dorn kann beispielsweise um seine Längsachse rotieren, wobei das Walzwerkzeug 22 typischerweise stationär (insbesondere rotatorisch) angeordnet werden kann.

Von besonderer Wichtigkeit ist vorliegend, dass das Walzwerkzeug 22 während des Ausformens der Rippen 17" eine Anpresskraft in Richtung F auf den Rohrgrundkörper 12' ausübt. Hierbei werden einzelne Rippen 17" aus dem Rohrgrundkörper 12' bzw. der äußeren Schicht 2 herausgearbeitet.

Die Rippen 17" können sich dabei beispielsweise kreisförmig in einer Ebene um den Rohrgrundkörper 12' erstrecken oder in Form einer endlosen Rippe, also im Wesentlichen wendelartig oder helixartig.

Abschließend lässt sich zu Fig. 13 anmerken, dass die Rippen 17" gemäß diesem Verfahren somit nicht mehr separat bzw. gesondert an den Rohrgrundkörper 12 angeordnet bzw. verschweißt werden müssen, sondern vielmehr materialeinheitlich und einstückig-stoffschlüssig aus dem Rohrgrundkörper 12' bzw. der äußeren Schicht 2 herausgearbeitet sind.

In einem weiteren, nicht dargestellten Ausführungsbeispiel können die Schichten 1 und 2 auch derart gewählt werden, dass bei der Ausformung der Rippen 17" auch Werkstoff einer innenliegenden Schicht 1 mit in den Bereich der Rippen 17" gelangt (diese somit im Querschnitt beide Materialien zeigen). Hierbei wäre die Schicht 2 somit etwas dünner zu wählen als im vorliegenden Ausführungsbeispiel gemäß Fig. 13.

## Patentansprüche

1. Rippenrohr (10, 10'), umfassend einen Rohrgrundkörper (12), an dessen Außenseite (16), insbesondere gesonderte oder integrale, Rippen (17), vorzugsweise umlaufend, angeordnet sind, **dadurch gekennzeichnet, dass** die Rippen (17) und/oder der Rohrgrundkörper (12, 12') aus einem mehrschichtigen Material (8) bestehen.

2. Rippenrohr (10, 10') nach Anspruch 1, **dadurch gekennzeichnet, dass** die Rippen (17) und/oder der Rohrgrundkörper (12, 12') aus einem, insbesondere vollflächig, plattierten Material (8) besteht.

3. Rippenrohr (10, 10') nach Anspruch 1 oder 2, **dadurch gekennzeichnet, dass** die, insbesondere untrennbaren, Schichten des mehrschichtigen Materials (8) jeweils aus metallischem Werkstoff (1, 2, 3, 9) bestehen.

4. Rippenrohr (10, 10') nach einem der voranstehenden Ansprüche, **dadurch gekennzeichnet, dass** mehrschichtige (8) mindestens eine Schicht (1, 2, 3, 9) aus folgender Gruppe aufweist:
• Kupfer,
• Aluminium,
• (Edel-)Stahl,
• (Kupfer-)Nickel,
• Titan,
• Messing,
• Bronze.

5. Rippenrohr (10) nach einem der voranstehenden Ansprüche, **dadurch gekennzeichnet, dass** das Rippenrohr (10) im Anbindungsbereich (19) der Rippen (17) am Rohrgrundkörper (12) eine, insbesondere ausgehärtete, Schmelze (18, 18', 18", 18‴) aufweist, mit welcher ein Band (13') zwecks Rippenbildung am Rohrgrundkörper (12) festgelegt, insbesondere verschweißt, ist.

6. Rippenrohr (10) nach Anspruch 5, **dadurch gekennzeichnet, dass** die Schmelze (18, 18', 18", 18‴) keinen aufgeschmolzenen Werkstoff der innersten Schicht des Bandes (13') und/oder des Rohrgrundkörpers (12) enthält.

7. Rippenrohr (10') nach einem der Ansprüche 1 bis 4, **dadurch gekennzeichnet, dass** der Rohrgrundkörper (12') aus dem mehrschichtigen Material (8) besteht, wobei integrale Rippen (17") aus dem Rohrgrundkörper (12') herausgewalzt sind, insbesondere ausschließlich aus der äußersten Schicht (2) des Rohrgrundkörpers (12').

8. Verfahren zur Herstellung eines Rippenrohres (10, 10'), insbesondere nach einem der voranstehenden Ansprüche, umfassend die folgenden Schritte:
• Bereitstellen, insbesondere Herstellen, von mehrschichtigem, vorzugsweise plattiertem, Material (8),
• Anbringen oder Ausbilden von Rippen (17) an einem Rohrgrundkörper (12, 12') unter Verwendung des mehrschichtigen Materials (8).

9. Verfahren nach Anspruch 8, **dadurch gekennzeichnet, dass**, an der Außenseite (16) des Rohrgrundkörpers (12) ein Band (13') zwecks Rippenbildung, insbesondere wendelförmig, festgelegt, vorzugsweise verschweißt, wird, wobei das Band (13') und/oder der Rohrgrundkörper (12) aus mehrschichtigem Material (8) bestehen.

10. Verfahren nach Anspruch 8, **dadurch gekennzeichnet, dass**, der Rohrgrundkörper (12') aus dem mehrschichtigen Material (8) besteht, insbesondere hergestellt wird, wobei die Rippen (17") aus dem Rohrgrundkörper (12') herausgewalzt werden, insbesondere ausschließlich aus der äußersten Schicht (2) des Rohrgrundkörpers (12').

11. Verfahren nach einem der Ansprüche 8 bis 10, **gekennzeichnet durch** folgenden, insbesondere vorausgehenden, Schritt:
• Auswahl von mindestens zwei Ausgangswerkstoffen (1, 2, 3, 9) für das mehrschichtige Material (8), in Abhängigkeit von den sich aus dem gewünschten Einsatz des herzustellenden Rippenrohrs (10, 10') ergebenden Anforderungen.

12. Rippenrohr (10) nach einem der Ansprüche 1 bis 6, **dadurch gekennzeichnet, dass** eine innere Schicht (2) der Rippen (17) unmittelbar mit mindestens einer Schicht (2') des Rohrgrundkörpers (12), vorzugsweise einer inneren Schicht (2'), in Kontakt steht.

13. Rippenrohr (10) nach einem der Ansprüche 1 bis 6 oder nach Anspruch 12, **dadurch gekennzeichnet, dass** die am besten wärmeleitfähige Schicht (2) der Rippen (17) mit der am besten wärmeleitfähigen Schicht (2') des Rohrgrundkörpers (12) in unmittelbarem Kontakt steht.
